# EUROPEAN PATENT APPLICATION

(11) **EP 3 796 664 A1**
(43) Date of publication of application: **24.03.2021**
(21) Application number: 19198665.2
(22) Date of filing: 20.09.2019
(51) Int. Cl.: H04N 21/266, H04N 21/8549, H04N 21/262, H04N 21/2187, H04N 21/61, H04N 21/4722, H04N 21/231, H04N 21/845, H04N 21/24

(54) **METHODS AND APPARATUSES FOR BROADCASTING ADDITIONAL CONTENT SERVICES**

(71) Applicant: SES S.A., 6815 Betzdorf (LU)
(72) Inventor: Baumgarten, Hans-Georg, 81667 München (DE); Müller, Michael, 81549 München (DE)
(74) Representative: Hoffmann Eitle

(57) **Abstract**

The invention relates to a method for live broadcasting a video stream representing an event as it happens (referred to as "original video stream"). The method comprises, at a transmitting side: storing (s1) parts of the original video stream; automatically (s2) deriving content (referred to as "derived content"), based on the stored parts of the original video stream, wherein deriving comprises including, in the derived content, at least one of the stored parts of the original video stream; live broadcasting (s3) the original video stream through a transmission channel; and broadcasting (s4), through the transmission channel, the derived content, wherein broadcasting the derived content takes place at least one of: during the live broadcasting of the original video stream, and after the live broadcasting of the original video stream. The invention also relates to apparatuses, systems, and computer programs.

## Description

### [Field of technology]

The invention relates to the field of transmission of a live event. It relates particularly to methods for live broadcasting a video stream representing an event as it happens. The invention relates notably to deriving content from the video stream. The invention may be used to, though not limited to, provide a receiving side with additional content services via broadcast.

### [Background]

During transmission of a live event, it is sometimes desirable to provide users with additional contents services, also referred to in the following as "derived contents". These additional content services may be related to the live event being transmitted and may enhance the user experience by making additional content available to the user. The additional content may comprise, for instance, a presentation of said live content from different camera perspectives or the possibility of starting over (as if it was possible to rewind to the live event transmission) the transmission of a live event thus resulting in a time-delayed transmission of the live content. Moreover, the additional content may be an interactive selection and presentation of particular highlights. If, for instance, the broadcast live event is a football match, the highlights may for instance be a selection of goals, penalty kicks or other salient scenes of the football match.

There is a constant need for improving methods, systems, and devices for providing additional contents services to users in connection with the broadcasting of live events.

### [Summary]

The present invention aims at, at least partially, addressing at least some of the above-mentioned needs. The invention includes methods, systems, and servers as defined in the independent claims. Particular embodiments are defined in the dependent claims.

In one embodiment, a method is provided for live broadcasting a video stream representing an event as it happens. Said video stream is hereinafter referred to as "original video stream". The method comprises, at a transmitting side: i) storing parts of the original video stream; ii) automatically deriving content (hereinafter referred to as "derived content") based on the stored parts of the original video stream; iii) live broadcasting the original video stream through a transmission channel; and iv) broadcasting, through the transmission channel, the derived content. Besides, deriving comprises including, in the derived content, at least one of the stored parts of the original video stream; and broadcasting the derived content takes place during the live broadcasting of the original video stream, and/or after the live broadcasting of the original video stream.

Automatically deriving content including one or more portions of the original content allows to flexibly create additional content services as a function of the stored parts of the original video stream. In turn, this notably allows to improve the user experience of those users with no or limited point-to-point internet connection.

The invention also relates, in some embodiments, to a transmitter for carrying out the above-described method. The invention further relates, in some embodiments, to a system comprising such a transmitter as well as a receiver. Yet furthermore, the invention relates, in some embodiments, to computer programs configured for carrying out the above-described method, computer program products storing such computer programs, and/or computer-readable mediums storing such computer programs.

### [Brief description of the drawings]

Fig. 1 schematically represents elements of internet-based systems for providing additional content services of a non-public reference implementation, to help understand the context in which some embodiments of the invention have been developed.
Fig. 2a is a flowchart of a method for live broadcasting a video stream representing an event as it happens, in one embodiment of the invention.
Fig. 2b schematically shows a timing relationship between the broadcasting of a derived content and the broadcasting of the original video stream in the embodiment of Fig. 2a.
Fig. 3a is a flowchart of a method for live broadcasting a video stream, according to a sub-embodiment of the invention.
Fig. 3b schematically shows a timing relationship between the broadcasting of a derived content and the broadcasting of additional content in the embodiment of Fig. 3a.
Fig. 4 is a flowchart of a method for live broadcasting a video stream, according to a sub-embodiment of the invention.
Fig. 5 is a flowchart of a method for live broadcasting a video stream, according to a sub-embodiment of the invention.
Fig. 6 is a flowchart of a method for live broadcasting a video stream, according to a sub-embodiment of the invention.
Fig. 7a schematically illustrates the functional elements of a server apparatus for the provision of the derived content, in one embodiment of the invention.
Fig. 7b schematically illustrates functional elements of the processing means of Fig. 7a, in one embodiment of the invention.
Fig. 7c schematically illustrates functional elements of the storing means of Fig. 7a, in one embodiment of the invention.
Fig. 8a schematically illustrates an exemplary structure of the functional elements of the derived content generator, in one embodiment of the invention.
Fig. 8b schematically illustrates an exemplary structure of the functional elements of the bouquet stream composer, in one embodiment of the invention.
Fig. 9a schematically illustrates exemplary data structures useful for processing of the original video stream, in one embodiment of the invention.
Fig. 9b schematically illustrates exemplary data structures useful for the configuration, the input and output of the processing means and for the configuration, the input, and the output of the derived content generator, in one embodiment of the invention.
Fig. 10 schematically illustrates a sequence of transmission blocks, in one embodiment of the invention.
Fig. 11 shows a transmission of derived contents according to an example, in one embodiment of the invention.

### [Detailed description]

The present invention shall now be described in conjunction with specific embodiments. The specific embodiments serve to provide the skilled person with a better understanding but are not intended to in any way restrict the scope of the invention, which is defined by appended claims. In particular, the embodiments described independently throughout the description can be combined to form further embodiments to the extent that they are not mutually exclusive.

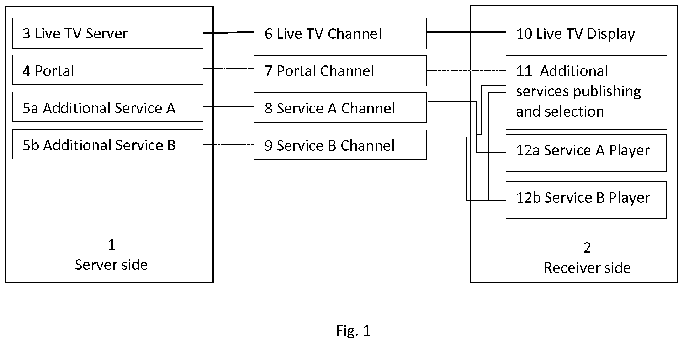

In a non-claimed, non-public reference implementation (discussed to help understand the context in which some embodiments of the invention have been developed), a user may be provided with an additional content service through the internet by making available additional capacity required for the transmission of the additional content after the user has requested the additional content service. Therefore, and with reference to Fig. 1, which schematically illustrates a non-claimed, non-public reference implementation, the creation of a point-to-point communication between a server side (server apparatus) 1 and a receiver side 2 may be triggered in response to a request from the user. The server side 1 may include a live TV server 3, a portal 4, and additional content services 5a and 5b. The server side 1 communicates with the receiver side 2 via respective channels 6 to 9 so as to allow the live TV content to be displayed on the receiver side 2 via a respective display 10 and to allow the additional content services 5a and 5b to be played on the receiver side 2 via respective players 12a and 12b.

These additional content services may be interactively selectable by the end user and may be made available through dedicated page functions 11. Moreover, these additional content services may be interactively retrievable. For instance, a web page may comprise a graphical user interface (GUI) showing which additional content services are available and allowing interaction (for instance selection) by the user. This is also shown by Fig. 1, which schematically represents elements of internet-based systems for providing additional content services of a non-public reference implementation.

The non-claimed, non-public reference implementation of Fig. 1 relies on a point-to-point internet connection for providing the additional content services and hence does not work for users with no, or only limited, internet connection.

In addition, there is also a problem that a common time reference between the additional content service and the original video stream is required to enable a correct display timing. This is because transmission of the additional content service is subject to unavoidable delays with respect to the original content due to the additional processing necessary for its creation and because the additional content service and the original video stream are processed via different processing means and using different high frequencies, coding and/or different decoding. Without a common time reference, synchronization problems may occur on the receiving side.

The additional content services in the non-public reference implementation should preferably be broadcast, and hence displayed, contemporaneously to (or within a short time period of) the broadcast of the original video stream. Therefore, preconfigured common time references between partial sequences of the original video stream and between the content derived therefrom should preferably be preserved during transmission and display of these contents.

Moreover, in the non-public reference implementation, in a case in which the transmission of the live TV event occurs via broadcasting (for instance via satellite), users have only limited interaction possibilities if they wish to see again already transmitted portions of a live event.

These users have either to explicitly configure, before the broadcasting of the live event, the user terminal to record the live event (which limits the flexibility of use) or to make use of the portions of the live event automatically buffered in the temporary memory of the terminal (which is however only of a very limited benefit).

Another problem of the non-public reference implementation is that a dynamic recognition of variable (i.e. non-statically defined prior to the transmission of the original video stream) additional content services is not supported: the additional content services have to be statically preconfigured. Satellite transponders may provide a plurality of TV programs and/or additional contents through a given carrier frequency, which requires that the satellite transponders to be configured in advance to support the TV programs. Thus, the bandwidths allocated for the transmission of additional content services have to be statically preconfigured, i.e. have to be configured at a time point prior to the broadcasting of the additional content service.

A further problem of the satellite broadcasting in the non-public reference implementation may be that the availability of individual additional content services is not predictable and only the whole live TV event, i.e. the original live event is indicated via electronic program guide (EPG) data.

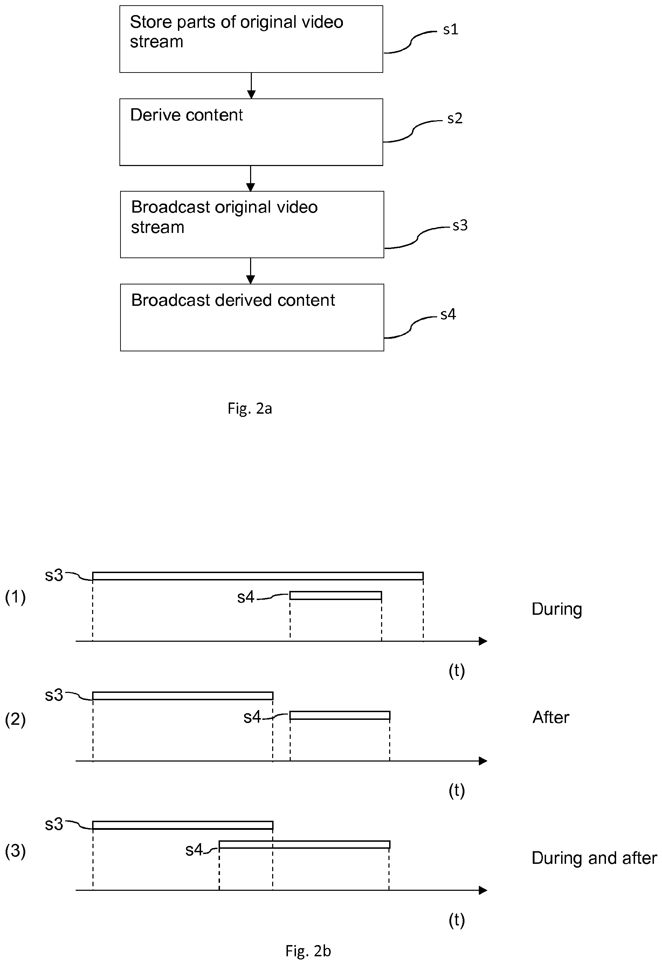

Fig. 2a is a flowchart of a method for live broadcasting a video stream representing an event as it happens, in one embodiment of the invention. The broadcast may for instance be a satellite broadcast or broadcast of another type (e.g. other types of radio communication such as for instance terrestrial radio communication). The event as it happens is also referred to in the following as the original video stream. The original video stream may comprise a time isochronous sequence of chunks (or videoframes). A typical chunk length is of the order of some seconds, for instance ten seconds. A chunk is a fragment of information and is used in multimedia formats such as for instance PNG (Portable Network Graphics), MP3, and AVI (Audio Video Interleave). Typically, a chunk includes a header, indicating some standard parameters, such as for instance the type of chunk and its size, and a variable area containing data, which may be decodable based on the parameters in the header.

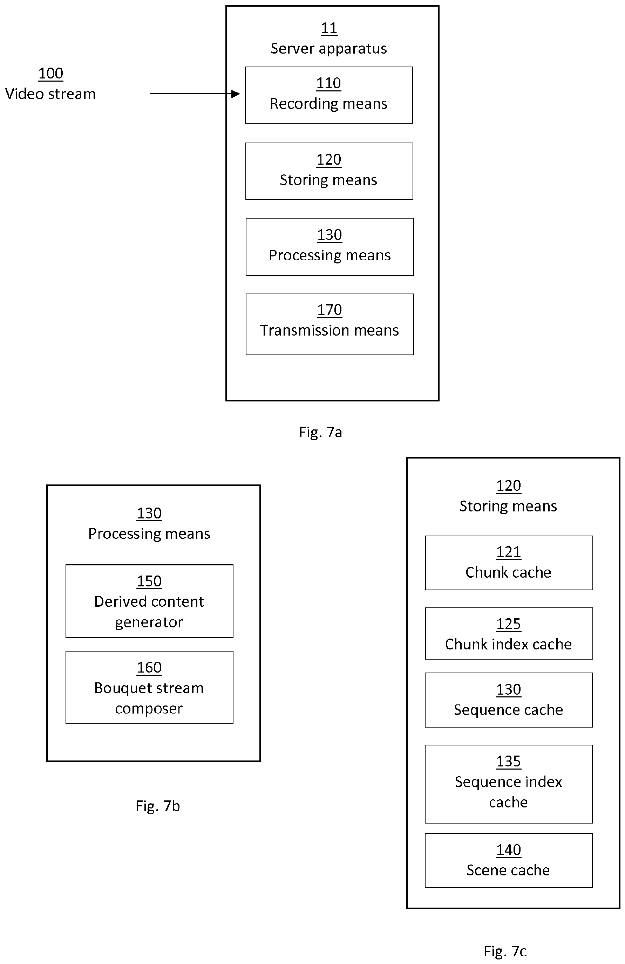

As shown in Fig. 2a, the method comprises storing s1 parts of the original video stream. The parts may be stored in a suitable storing means, examples thereof are described in connection with Figs. 7a and 7c.

A part of the original video stream may be expressed in terms of frames (for instance a single frame or a plurality of frames), in terms of chunks (for instance, a chunk or a plurality of chunks) or in terms of the amount of data corresponding to a given time duration of the original video stream when reproduced on a receiving side (for instance 1 second, 10 seconds etc.). Other ways of expressing the stored parts are also possible.

Moreover, different stored parts need not be expressed in a homogeneous way: for instance, a first stored part may be expressed in terms of chunks while a second stored part may be expressed in terms of time duration. In another example, the first stored part may correspond to a first amount of data and a second stored party may correspond to a second amount of data, wherein the first amount of data differs from the second amount of data.

The terms "stored part" and "stored chunks" are used interchangeably in the following. However, as discussed above, the invention is not limited to expressing the stored parts in terms of chunks.

With further reference to Fig. 2a, the method comprises automatically deriving s2 content based on the stored parts of the original video stream. This content is also referred to as the derived content in the following. The step of deriving comprises including, in the derived content, at least one of the stored parts of the original video stream.

In one embodiment, the term "automatically" in connection with the term "deriving" means that a piece of derived content is derived without any user intervention at the time of derivation of said piece of derived content, i.e. without any user intervention for the derivation per se. User intervention may nevertheless occur at a time prior to that of the derivation, for instance to create the underlying rules and/or patterns enabling the automatic derivation. User intervention may as well optionally occur, in a sub-embodiment, after derivation, i.e. for example between derivation and broadcasting, or during broadcasting, for example as part of a supervisory control process carried out by an operator.

The derivation may be carried out on the basis of computer-implemented processes corresponding to computer programs or algorithms, processes hardwired on an integrated circuit, or a combination of the above. For instance, the derivation may be carried out on the basis of predetermined composition rules and/or predetermined composition patterns, which will be explained later on in connection with the server apparatus 11 implementing the transmitting side.

As further shown in Fig. 2a, the method also comprises live broadcasting s3 the original video stream and broadcasting s4 the derived content. In one embodiment, the derived content and the original video stream are broadcast via the same transmission channel.

The method in this embodiment makes it possible to enhance user experience by timely making additional content available to the user.

Fig. 2a shows that step s3 is performed before step s4. However, step s4 may take place during the live broadcasting of the original video stream, and/or after the live broadcasting thereof. That is, as illustrated by Fig. 2b, step s4 takes places either (1) during step s3, (2) after step s3, or (3) both during step s3 and after step s3. The vertical axis in Fig. 2b refers to a broadcasting time. The method for live broadcasting a video stream representing an event as it happens described in connection with Fig. 2a is implemented by a transmitting side, an example of which will be discussed in connection with Fig. 7.

A non-limiting example of the event may be for instance a sport match, such as for instance a football match. An example of derived content may be a derived content comprising a summary, which will be referred to hereinafter as "summary derived content". The summary derived content may be derived by selecting, for every chunk of the football match, a single frame in accordance with a composition rule for deriving the summary derived content. The summary derived content thus comprises a selection of subframes and allows a user of a receiving side, for instance a TV spectator, who has missed the starting time of the football match, to receive and watch a summary of the football match (i.e., as it occurred so far, if the match has not ended yet).

According to an example, the summary derived content may be available, i.e. its derivation may be triggered, only after the stored parts of the original video stream exceeds a first threshold and may remain available only until a second threshold. The first and second thresholds may be indicative of a respective time duration of the original video stream. The time duration may refer to a time duration when displayed on a receiving side, which substantially corresponds to the time duration of the live event recorded. For instance, the summary derived content may be available only after the overall duration of the stored parts has exceeded 5 minutes and may remain available as long as the overall duration of all stored parts does not exceed 10 minutes.

Another example of derived content may be a derived content comprising a so-called quick summary, which is hereinafter referred to as "quick summary derived content". The quick summary derived content may be derived by selecting, for every 10 chunks of the football match, a single frame (or a single chunk). This derived content may for instance be available only after the duration of the stored parts has exceeded 10 minutes and may remain available as long as the duration of the stored parts does not exceed 30 minutes.

Different derived contents may be thus available as a function of the stored parts, such as depending on the amount of stored parts on the transmitting side (as will be explained below). In other words, the derivation of derived content may be triggered, directly or indirectly, by the stored parts. Hence it is possible to provide a spectator with a time dependent, i.e. variable, offer of derived contents.

According to an example, derivation may be triggered by the amount of data corresponding to the stored parts: if the amount of data exceeds a given threshold associated with a given composition rule, the given composition rule is applied, and the corresponding derived content is derived, i.e. generated. Similarly, the derivation of derived content may be terminated as a function of the stored parts. For instance, as explained above, the quick summary derived content may stop being available after the overall amount of stored parts have exceeded a 30-minute duration. Moreover, since which stored parts are available changes over time, different derived content may be available (or stop being available) as a function of time. Other triggers may for instance be highlights scenes (goal scenes, penalty kicks, etc.): if it is determined that at least one of the stored parts corresponds to a highlight scene, a corresponding derived content may be generated. That is, in this case the derivation may be triggered by a subset of the stored parts. According to another example the stored parts may indirectly trigger the derivation. For instance, the derivation may be triggered on the basis of metadata relating to the stored parts.

Yet another example of derived content may a derived content comprising a complete or partial copy of the original video stream. Such a derived content is hereinafter referred to as "copy derived content". In one embodiment, a further video stream comprising the copy derived content may comprise a partial or complete copy of the original video stream. The further video stream is broadcast with a time delay with respect to the broadcasting of the original video stream. This allows, for instance, a user who has missed the start of a football match to watch it completely, or partially, from the beginning. This time delay is referred to as the "first time delay" in the following, and the further video stream comprising the first derived content is hereinafter referred to as "first further video stream".

Moreover, even if Fig. 2a refers to a single derived content, i.e. a first derived content, the invention is not limited thereto. A plurality of derived contents may be generated. For instance, a further derived content, referred to as "second derived content" in the following, may be automatically derived based on the stored parts of the original video stream. Deriving the second derived content comprises including, in the second derived content, at least one of the stored parts of the original video stream. The second derived content is also broadcast through the same transmission channel as the first derived content and the original video stream.

The first derived content and the second derived content may each be any type of derived content, such as a summary derived content, a quick summary derived content, or a copy derived content. In one embodiment, the type of the first derived content and that of the second derived content are the same.

In one embodiment, broadcasting, through the transmission channel, the second derived content comprises broadcasting, through the transmission channel, a further video stream, referred to as "second further video stream". The second further video stream comprises the second derived content. The second further video stream comprises a partial or complete copy of the original video stream. The second further video stream is broadcast with a time delay, hereinafter referred to as "second time delay", with respect to the broadcasting of the original video stream. Moreover, the second time delay differs from the first time delay.

In a sub-embodiment of the embodiment described with reference to Fig. 2a, the original video stream and the derived content are broadcast through the same transmission channel on a same carrier frequency or on a same group of carrier frequencies.

In a further sub-embodiment of the embodiment described with reference to Fig. 2a, broadcasting, through the transmission channel, the derived content comprises broadcasting, through the transmission channel, a further video stream comprising the derived content. That is, two video streams are broadcast, a first one being the original video stream, and the second one, referred to as further video stream comprising the derived content. The invention is, however, not limited to this form of transmission of the derived content. Namely, in another sub-embodiment, the derived content may be transmitted by modifying the structure of the original video stream.

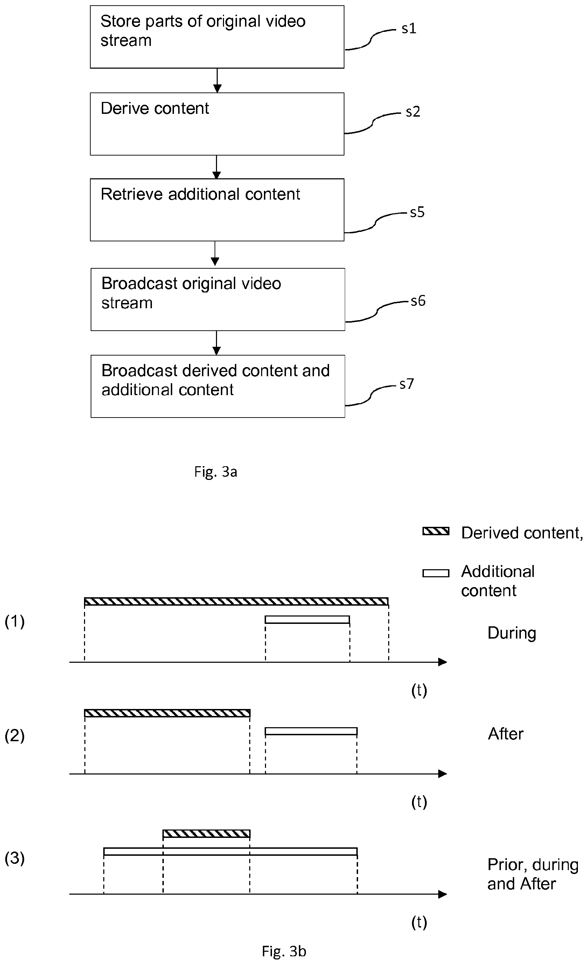

Furthermore, as illustrated by Fig. 3a in yet another sub-embodiment of the embodiment described with reference to Fig. 2a, the step of broadcasting, through the transmission channel, comprises broadcasting additional content that is not derived based on the stored parts of the original video stream. The additional content is broadcast as part of the further video stream and the additional content is arranged to be viewed: (i) prior to the derived content (not illustrated in Fig. 3b), (ii) after the derived content (Fig. 3b, part (2)), and/or (iii) during the derived content (Fig. 3b, part (1)). The additional content may also be arranged to be viewed both prior and during the derived content (not illustrated in Fig. 3b), during and after the derived content (not illustrated in Fig. 3b), or prior, during, and after the derived content (Fig. 3b, part (3)). Fig. 3b schematically illustrates the relationship between the viewing time of the derived content and the viewing time of the additional content on a receiving side, for instance at a user terminal.

In particular, and with reference to Fig. 3a, steps s1 and s2 may substantially be the same steps as those described in connection with Fig. 2a. Furthermore, step s6 may also substantially correspond to step s3 of Fig. 2a. The method comprises however an additional step s5 of retrieving additional content. The retrieval may be performed by accessing a server apparatus 11 in which the additional content is stored. The method also comprises a step s6 of broadcasting the original video stream and a step s7 of broadcasting the derived content and additional content.

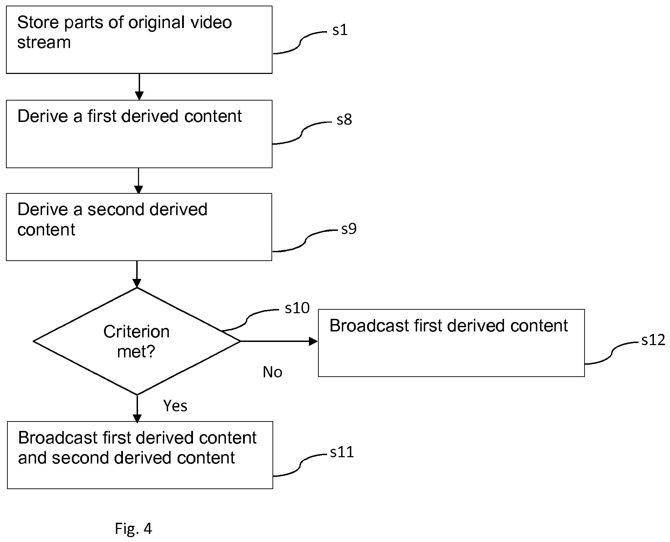

Fig. 4 is a flowchart of a method for live broadcasting a video stream according to an embodiment of the present invention. The method according to this embodiment comprises storing s1 parts of the original video stream as described in relation to step s1 of Fig. 2a. Moreover, it also comprises a step s8 of deriving a first derived content and a step s9 of deriving a second derived content. The first and second derived contents may be any derived content, although they may not be the same derived content. That is, the first derived content and the second derived content are derived using different composition rules. Two composition rules are considered different if they use at least one different parameter or if a parameter has different values. For instance, a copy composition rule generating a copy derived content being broadcast with a first time delay (for instance 5 minutes) is a composition rule that differs from a copy composition rule creating the same copy derived content with a second time delay (different from the first time delay, for instance 10 minutes). This is because the two composition rules use the same parameter to which different numerical values are assigned, namely the time delay.

The method further comprises determining, in step s10, whether a criterion for broadcasting the second derived content is met; and if it is determined that the criterion is not met, refraining from broadcasting the second derived content. That is, only the first derived content is broadcasted in step s12. Otherwise, if the criterion is met, both the first and second derived contents can be broadcast in step s11.

In one embodiment, the criterion may be defined, for instance, in terms of the maximum bandwidth required for broadcasting the second derived content.

The method may for example comprise determining a first broadcast resource required for broadcasting the first derived content and determining a second broadcast resource required for broadcasting the second derived content. Step s10 of determining whether the criterion for broadcasting the second derived content is met may then comprise determining whether a sum of the first broadcast resource and the second broadcast resource exceeds a threshold. If the sum of the first and second broadcast resources exceeds the threshold, it may be determined that the criterion is met and hence both the first and second derived contents may be broadcast in step s11. For instance, the first broadcast resource and the second broadcast resource may be a maximum bandwidth required for broadcasting the first derived content and the second derived content respectively, while the threshold may be a maximum (or minimum) available broadcasting capacity on the transmitting side.

In this embodiment, the transmitting side has control over the derived contents it broadcasts, in particular by determining whether the sum of the first and second broadcast resources exceeds the threshold and if so, it may refrain from broadcasting the second derived content, so that the transmitting side may make an optimal use of the available bandwidth. For instance, the transmitting side, once it has been determined that broadcasting of the second derived content is not possible, may broadcast the first derived content in a more efficient manner (for instance by broadcasting more chunks of the first derived content per transmission block) or may broadcast a further derived content whose broadcast resource meets the criterion. That is, this embodiment allows efficient broadcasting of the derived content(s).

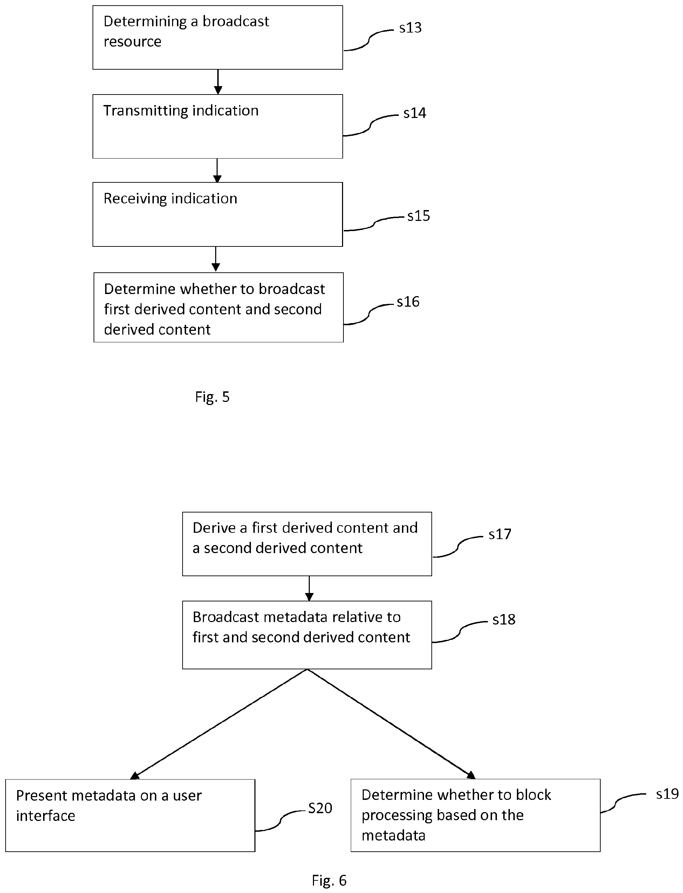

Fig. 5 is a flowchart of a sub-embodiment of the embodiment described in connection with Fig. 2a. The method in this sub-embodiment comprises, further to the steps described with reference to Fig. 2a, a step s13 of determining a broadcast resource required for broadcasting the derived content. The broadcasting resource may be, for instance, the maximum bandwidth required for broadcasting the first derived content. The method further comprises a step s14 of transmitting an indication of the determined broadcast resource, a step s15 of receiving the indication of the determined broadcast resource, and a step s16 of determining whether to block processing, at a receiving side, of the derived content based on the received indication. Steps s15 and s16 are performed at a receiving side.

In this embodiment, a receiving side may therefore preemptively block processing of a given derived content if it determines, for instance, that it cannot process the given derived content. The receiving side may thus keep processing capability free for those derived content it is able to process, while blocking the others. This embodiment has thus the advantage that more derived contents are processable by the receiving side.

Fig. 6 is a flowchart of a method for live broadcasting a video stream in a sub-embodiment of the embodiment described in connection with Fig. 2a.

The method comprises a step s17 of deriving the first derived content and the second derived content. This step corresponds to steps s8 and s9 described in connection with Fig. 4. However, in this embodiment, the first and second derived contents may be derived using an identical composition rule.

Further, the method comprises a step s18 of broadcasting metadata relating to the first and second derived contents. Metadata may comprise information about the content of the derived content, such as for instance a title of the derived content (for example, "summary", "quick summary", "copy" etc.), a selection of chunks of the derived content (for example a preview of the derived content), an indication of the broadcast resource (as for instance discussed in connection with Fig. 5), and the like.

Besides, the method may comprise, at the receiving side, either a step s19 or a step s20. In step s19, the receiving side automatically determines whether to block processing, at a receiving side, of the first derived content and/or of the second derived content, based on the received metadata. In step s20, at the receiving side, a user of the receiving side may be presented with the received metadata or with information derived therefrom via a user interface (for instance a display or a TV), so that the user may determine whether the processing, at a receiving side, of the first derived content and/or of the second derived content is to be blocked. The user having been presented with the information may provide an input to the receiving side so as to instruct the receiving side to block the processing, or not.

In a further sub-embodiment of the embodiment described in connection with Fig. 2a, a priority of the determined content may be taken into account.

In particular, at the transmitting side, the method may comprise automatically deriving the first and second derived contents as already explained in connection with the other sub-embodiments. Moreover, the method may further comprise automatically determining whether the second derived content has priority over the first derived content in accordance with a priority rule. Thus, broadcasting, through the transmission channel, the derived content may comprise broadcasting at least the second derived content if it is determined that the second derived content has priority over the first derived content and broadcasting at least the first derived content otherwise.

This embodiment may also comprise establishing an order of broadcasting of the derived contents. Doing so is advantageous if the bandwidth is small, i.e. if the bandwidth is not sufficient to broadcast all derived contents and the original video stream too. For instance, a second derived content becoming available after a first derived content became available (for instance because the derivation of the second derived content is triggered later than the derivation of the first derived content) may be broadcast with a higher priority than that of the first derived content. In this manner, if is determined for instance that a criterion for broadcasting both the first and second derived contents is not fulfilled, it can be ensured that the second derived content is always broadcast while renouncing to broadcast the first derived content.

The priority rule may for instance be an absolute priority, indicated for instance by a number which is statically assigned per derived content. The priority number may be automatically assigned during the derivation of a given derived content. The broadcasting of derived contents with higher (or lower) absolute priority numbers may be prioritized over the broadcasting of derived contents with lower (higher) absolute priority numbers. Alternatively, the priority composition rule may be a relative priority (as opposed to absolute). In a sub-embodiment, relative priorities may be assigned for all types of derived contents. In another sub-embodiment, relative priorities may be assigned for only some types of derived contents.

For instance, in a non-limiting example, the broadcasting of a quick summary derived content may be prioritized over the broadcasting of the summary derived content, whereas there may be no priority composition rule with respect to a third derived content (for instance the copy derived content).

Fig. 7a schematically illustrates some functional elements of a server apparatus 11, which may serve as the transmitting side for implementing the method described with reference to Fig. 2a. Fig. 7a shows that the server apparatus 11 comprises recording means 110, storing means 120, processing means 130, and transmission means 170.

A plurality of well-known techniques exists for segmentation of a video stream signal 100 (live TV signal) into a linear (in time) and isochronous sequence of chunks, such as for instance Apple HTTP Live Streaming (HLS), or MPEG Dash processes. Based on these techniques, chunk-encoders exist to provide the video stream signal 100 in the form of, for instance, HLS chunks to the recording means 110. As known in the art, a chunk is an elementary, isochronous videoframe sequences supported by these processes. The chunk sequence may be received by recording means 110 and saved in storing means 120. This allows processing of the chunks by processing means 130. Recording means 110 may store and index the chunks in storing means 120 based on their time sequence, i.e. from a start point to an end point of the video frame sequence. In this manner a later read of the sequence can be carried out in a timely manner.

The processing means 130 are configured to derive the derived content according to at least one composition rule as described in connection with step s2 of Fig. 2a, whereas the transmission means 170 are configured to transmit, i.e. broadcast, the original video stream and the derived content as described in connection with steps s3 and s4 of Fig. 2a.

For instance, the processing means 130 are configured to automatically and continuously derive a new sequence of chunks, i.e. the derived content, on the basis of the chunks of the original video stream stored in the storing means 120 by including, in the derived sequence, at least one of the stored chunks of the original video stream.

Moreover, the processing means 130 are configured to coordinate the transmission, of the derived content as explained above in connection with for instance Fig. 4 or Fig. 5.

The transmission means 170 are configured to continuously transmit the derived contents during and/or after broadcasting of the original video stream.

Fig. 7b schematically illustrates one embodiment in which the processing means 130 comprises two sub-units: a derived content generator 150 and a bouquet stream composer 160. The derived content generator 150 and the bouquet stream composer 160 are respectively configured to carry out the derivation function and the coordination function described in connection with the processing means 130 of Fig. 7a.

Moreover, in one embodiment, as schematically illustrated by Fig. 7c, the storing means 120 may comprise a plurality of storing means, and particularly chunk storing means 121, chunk index storing means 125, sequence storing means 130, sequence index storing means 135, and scene storing means 140. At least some of these may be implemented via a temporary memory. Moreover, at least some of these may be implemented via a cache memory.

The chunk storing means 121 are configured for storing chunks of the original video stream. The chunk index storing means 125 are configured for storing chunk identifiers, which are identifiers derived from chunk time indices. The sequence storing means 130 are configured for storing sequence elements, which are elements obtained by the server apparatus 11 from external sources. An example of external source is another server apparatus in charge of providing the additional content described in connection with Fig. 3a. The sequence index storing means 135 are configured for storing sequence identifier, which may be identifiers derived from sequence time indices. The scene storing means 140 are configured for storing scenes which may be, for example, sequences of chunks derived from the original sequence of chunks of the original video stream.

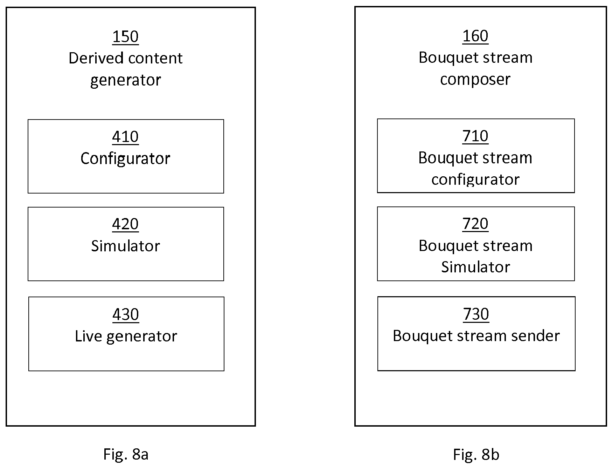

Fig. 8a schematically illustrates an exemplary structure of the functional elements of the derived content generator 150, which may comprise a configurator 410, a simulator 420, and a live generator 430.

Broadly speaking, the components in charge of the configuration and planning of the processes of generating the derived contents, i.e. the configurator 410 and the simulator 420, may be distinguished from the running time component, i.e. the live generator 430.

The live generator 430 generates content elements which are elements, for instance chunks, comprised in the derived content. These content elements are generated in a timely manner and automatically during the recording of the corresponding event. The generation may be performed by reference to stored chunks of the original video stream.

The simulator 420, together with the bouquet stream composer 160, is configured to predict the generated content elements and to estimate the bandwidth required for their broadcast. This enables the server apparatus 11 to ensure that any prioritised derived content can be broadcast within the available bandwidth.

The configurator 410 provides an application program interface (API) for the configuration of the derived content and the original video stream. By means of the API an operator may create and to modify the data structures of both the derived contents and the original video stream.

The simulator 420, when requested by the bouquet stream composer 160, generates the content elements of a derived content. Thanks to the APIs of the bouquet stream composer 160 it is possible to allow an operator to check the correctness of the broadcasting plan.

As described above, the bouquet stream composer 160 is configured to coordinate the transmission of the derived contents.

For the broadcasting the bouquet stream composer 160 uses the whole bandwidth available for the broadcast. The bouquet stream composer 160 divides the available total bandwidth and assigns to the element to be transmitted a corresponding portion of the bandwidth. If individual scene elements can flexibly be broadcast (for instance, flexible scheduled broadcasting start), they can be used to support the broadcasting of prioritised derived content. For instance, their respective broadcasting start can be delayed so as to broadcast the prioritized elements first.

Fig. 8b schematically illustrates an exemplary structure of the functional elements of the bouquet stream composer 160. In the bouquet stream composer 160, it may be possible to distinguish between two groups of components. On the one hand, the components in charge of the configuration and planning of the composition of the transmission block sequence of the whole collection of derived contents of an original video stream. On the other hand, the running time component. That is, the bouquet stream configurator 710 and the bouquet stream simulator 720, on the one hand, and the bouquet stream sender 730, on the other hand.

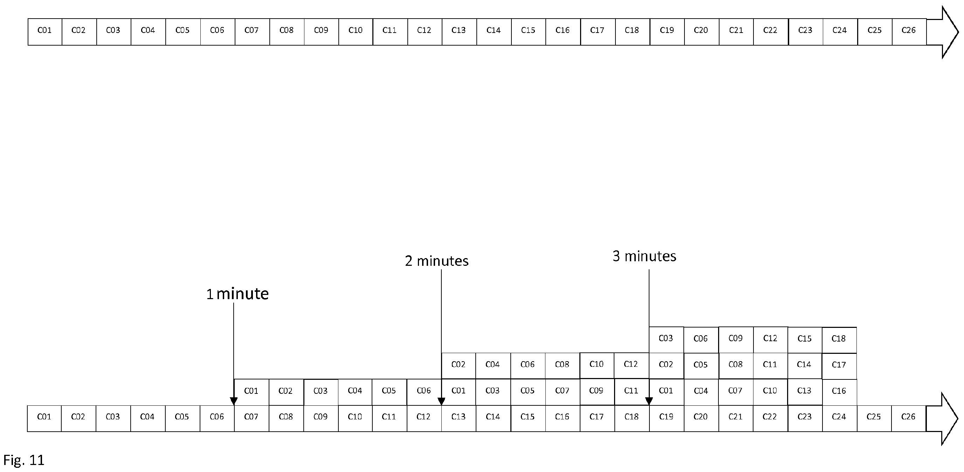

The derived content may also be broadcast using all the available bandwidth. For instance, more than one content element of a given derived content may be transmitted in a same transmission block, see also Fig. 11. In this manner, the receiving side would have more time available for processing the derived contents, since the respective content elements would be available ahead of the time in which they need to be reproduced.

The bouquet stream configurator 710 provides an API for the method of configuration of the bandwidth allocation via the bouquet stream simulator 720 and bouquet stream sender 730. Hence it is possible to define the maximum available bandwidth for each future transmission block to be transmitted.

The bouquet stream sender 730 transmits the content elements of the derived content and the chunks relating to the original video stream (hereinafter referred to as basic chunk) timely and automatically during the recording of the event to the transmission means 170.

The bouquet stream simulator 720 and bouquet stream sender 730 output the sequence of the transmission blocks. The requirements for transmitting the content elements of the derived contents in the first transmission block are determined. Based on this and taking into account possible other parameters (such as priorities), the bouquet composer 160 determines which content elements are to be sent with the first transmission block. If content elements remain, which cannot be transmitted with the first transmission block and whose transmission cannot be postponed to a second transmission block, the system, for instance the bouquet composer 160, detects or indicates a composition error.

The composition of the second transmission block is done in a similar manner and takes place in a timely manner (i.e. shortly thereafter) with respect to the broadcasting of the first transmission block. This process is repeated until all the elements of the derived contents have been broadcast.

The bouquet stream simulator 720 together with the simulator 420 are configured to predict the generated content elements (the derived contents) and to estimate the bandwidth required for their broadcast. This enables the server apparatus 11 to ensure that the totality of the derived contents associated with an original video stream can be broadcast within the framework of the available transmission capacity.

The sequence of transmission blocks outputted by the bouquet stream composer 160 is converted by the transmission means 170 in a video stream and then broadcast. The video stream may be broadcast by the transmitting side and received on a transmitter side for instance via transmission components such as transmission antenna, transponder, home antenna/LNB and transport stream receiver, according to known standards. For instance, the chunk sequence may be transformed in a data stream via Push Video on Demand and DVB-S2 transport stream embedding. This data stream can be transmitted via satellite-based infrastructure for broadcasting and receiving of DVB-S2 TV services. According to Push Video on Demand, the content is pushed, i.e. provided without the user having requested it.

The derivation of the derived content via the recording means 110, processing means 130, derived content generator 150, bouquet stream composer 160 and transmission means 170 may lead to unavoidable transmission delays which in turn may lead to synchronization problem on the receiving side. In particular, this may lead to problems in the contemporary display of the original video stream and of the derived contents derived therefrom when the original video stream and the derived contents are processed by processing means using different high frequencies, coding and/or different decoding.

In view of the above, in one embodiment, the same processing means (coding, decoding and high frequency) are used for processing both the original video content and the derived content derived therefrom.

For every derived content, a sequence of basic chunks is created, and thereafter broadcast, comprising chunks stored in the original sequence, i.e. the chunks relating to the original video stream.

Moreover, since the storing, analysis, composition, bouquet generation, and distribution of the derived contents occur timely with respect to the recording of the original video stream, it is possible to maintain a close time correspondence between the original video stream and the content derived therefrom. In view of this it is possible to timely provide the contents to the user, thus enhancing user experience.

In one embodiment, the time delay between the broadcasting of the content elements of the derived content and that of the recording of the corresponding original video stream is small in order to maintain the original content up to date. Moreover, in one embodiment, this time delay is a constant time delay so as to simplify processing.

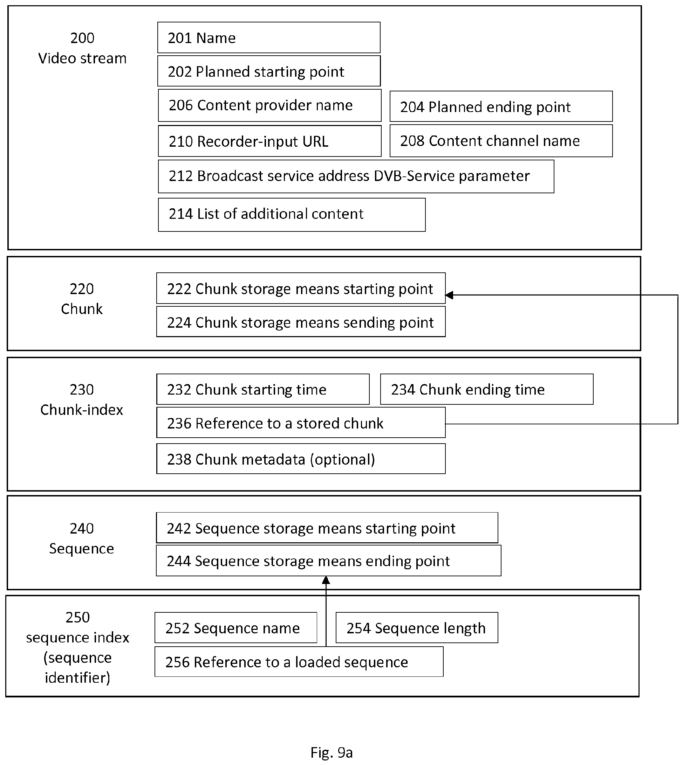

Fig. 9a shows exemplary data structures useful for the processing, in particular, configuration, input, and output, of the original video stream in one embodiment of the invention. In particular, the video stream data structure 200 may comprise the following fields: a name field 201, a planned starting point field 202, a planned ending point field 204, a content provider name field, a content channel name field 208, a recorder input URL field 210, a broadcast service address (DVB-Service parameter) field 212, and a list of additional content services 214 (list of derivable contents).

Moreover, the chunk data structure 220 may comprise a chunk storage means starting point field 222 and a chunk storage means end field 224 for indicating a portion of the storage means in which the chunk is stored.

The chunk index (chunk identifier) data structure 230 may comprise a chunk starting time field 232, a chunk ending time field 234, a "reference to a stored chunk" field 236, and (optionally) a chunk metadata field 238.

The sequence data structure 240 may comprise a sequence storage means starting point field 242 and a sequence storage means end field 244.

The sequence index (sequence identifier) data structure 250 may comprise a sequence name field 252, a sequence length field 254, and a "reference to a loaded sequence" field 256.

Data structures 240 to 256 relate to the case in which additional content is also stored in the storage means. The additional content, as explained above, is independent from the original video stream signal 100 and is provided by storage means 130 and 135.

The recorder 110 may be configured to continuously record the live TV event video signal throughout the whole duration of the original video stream and to save it in the storing means 120.

The new sequence of chunks may be derived during a continuous analysis of the recorded live TV events chunks and may be referred to a scene. A scene may be created according to the configuration of one or more derived contents 310. A scene may be generated on the basis of the recorded live TV event chunks and on the basis of predetermined composition rules.

A predetermined composition rule is a rule, for instance a deterministic rule, that has been defined in the server apparatus 11 before the live TV event video signal 100 is stored in the storing means 120. A composition rule defines how the derived content is created (i.e. derived). In particular, it defines at least which stored part of the stored parts of the original video stream is to be included in the derived content. Additionally, the composition rule may define parameters additional to those already discussed. A composition rule may define in particular a broadcast delay parameter defining when the derived content is to be broadcast, a trigger parameter, defining when the derivation of the derived content is triggered, a derivation termination parameter, defining when the derivation of the derived content is stopped, and a broadcast termination parameter, defining when the broadcast of the derived content is stopped. A delay parameter may be an absolute delay parameter, for instance a delay with respect to the derivation of the derived content itself, but may also be a relative delay parameter, defined for instance with respect to another derived content. For instance, according to a rule, the second derived content may be broadcast n minutes after broadcast termination of the first derived content. The broadcast termination parameter does not necessarily have to be explicitly defined, it can also be implicitly defined. For instance, the broadcast may be terminated as soon as possible, or it may be terminated according to a termination priority. Furthermore, the termination of the broadcast of the first derived content may be defined as a function of the broadcast of the second derived content. For instance, the broadcast of the second derived content may be terminated n minutes before the start of the broadcast of the first derived content.

The parameters defined by a given composition rule are not limited to the above. Other parameters may also be defined.

In one embodiment, a scene may be generated on the basis of recorded live TV event chunks and a predetermined composition rule or pattern.

A predetermined composition pattern is a composition pattern that has been defined in the server apparatus 11 before the live TV event video signal 100 is stored in the storing means 120. The predetermined composition pattern deterministically links derived content derived according to the composition rule with services-specific additional content. The additional content may be preloaded (i.e. loaded before the live TV event video signal 100 is stored in the storing means 120) video sequences.

In one example, the additional content may be event specific advertisement, for instance football specific advertisement. The advertisement may for instance act as a pre-roll of the on-the-fly derived content. In another example, the additional content may enable a user to input a feedback via the receiving side. For instance, the additional content may be TV client interaction control data element enabling interactive voting which may be available during, for example, 30 seconds after broadcasting of the derived content.

The derivation of a derived content, via the application of the predetermined composition rule or the predetermined composition pattern may be triggered by a composition trigger. In particular, the use of chunks or asynchronous video sequence as scene elements may be triggered by the availability of a given predefined quantity of chunks of the original video stream, i.e. the chunks stored in the chunk index cache 125. The generator 150 may continuously monitor the quantity of the stored chunks in the chunk index cache 125 and, if the quantity of the stored chunks allows to apply a composition rule, a scene element sequence is created according to this rule. The derivation of the derived content may similarly be interrupted based on a predetermined quantity of data. Moreover, a given derived content may be updated (for instance using different stored chunks) based on the availability of the stored chunks.

The generator 150 may operate, for every configured composition rule (or composition pattern) of the derived content, a background process that constantly, or at least periodically, monitors the availability of the stored chunks.

The composite sequence of content elements 350 comprises the content of the derived content. The composite sequence is referred to as a scene. A scene element may be created via a reference to a sequence of chunks of the original video stream.

The composed content elements 350 and their sequence may both be outputted to the storing means and particularly may be outputted to the scene storing means and therein stored.

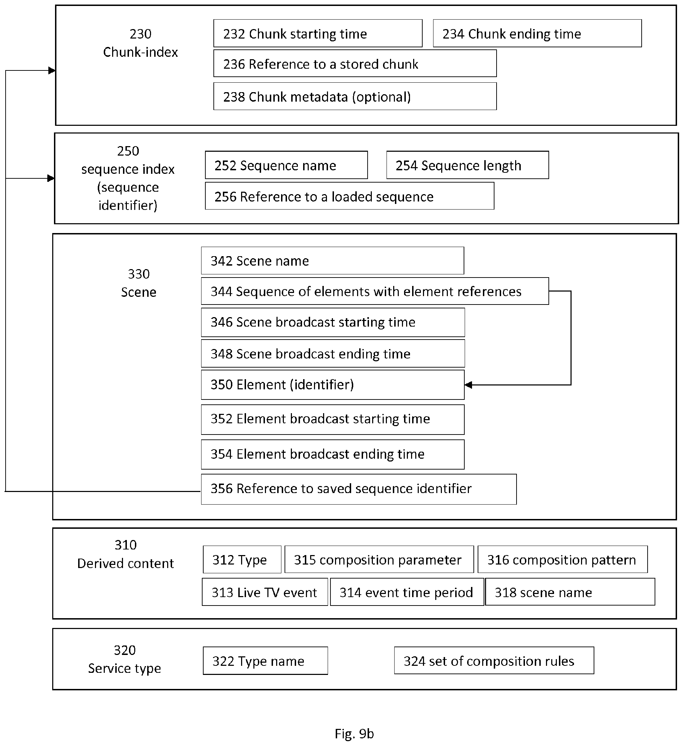

Fig. 9b shows exemplary data structures useful for the configuration, the input, and the output of the processing means (derived content generator) and the derived content in one embodiment of the invention. The derived content data structure may comprise a chunk index field 230, a sequence index (sequence identifier) field 250, a scene field 330, a derived content field 310, and a "type of service" field 320. The chunk index field 230 and the sequence index (sequence identifier) field 250 have already been discussed above. The scene data structure (i.e., scene field 330) may comprise the following fields: a scene name field 342, a "sequence of elements with element references" field 344 indicating how to compose the different elements of a scene, a scene broadcast starting time field 346, a scene broadcast ending time field 348, an "element identifier indicating the content elements of the sequence" field 350, an element broadcast starting time field 352, an element broadcast ending time field 354, and a "reference to saved sequence identifier" field 356.

The derived content field 310 comprises a type field 312 defining the type of the derived content, a live TV event field 313, an event time period field 314, a composition parameter field 315, a composition pattern field 316, and a scene name field 318. The service type data structure (i.e., service type field 320) comprises a type name field 322 and "a set of composition rules" field 324 specifying the composition rules for deriving a given derived content.

For every derived content configured in the processing means 130 (or in the generator 150), a trigger composition event and/ or a concrete trigger time period of an event are pre-defined, i.e. are defined before the live TV event video signal 100 is stored in the storing means 120. A given composition live TV event and the event time period are examples of the trigger parameter. In addition, a type of the derived content is defined. The type 312 of the derived content is linked to one or more composition rules (or composition patterns) 324 according to which the derived content is derived. The configuration of the derived content supports the parametrisation of composition elements and/or of composition rules.

As explained above, scene elements are either live TV events-related chunks 220, i.e. chucks derived from the original live TV event, or a sequence of isochronous videoframe 240, 250, that were not derived from the live TV chunks. Hence the sequence may also comprise elements which do not include any of the chunks of the live TV event. The sequences may be provided to the server apparatus 11 from external sources and may be stored in the storing means, particularly they may be stored in the sequence cache 130 and sequence index cache 135.

In one embodiment, a common format is used for all content types, i.e. for the sequences, for the stored chunks (corresponding to that of the recorded chunks) and for the additional content amongst others. This may result in a simplified broadcasting method and broadcasting apparatus by allowing a faster processing by the processing means which process the content substantially contemporarily to the broadcasting of the live event. Moreover, this simplifies and expedites the operations of the generator 140 and the bouquet stream composer 160 while allowing them to operate in a timely manner with respect to the broadcasting of the original video stream

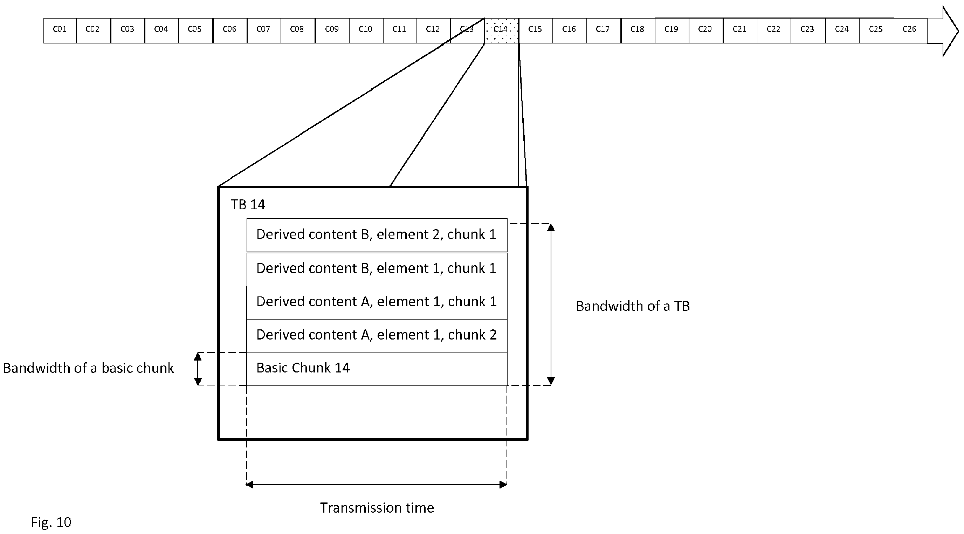

Fig. 10 schematically illustrates a sequence of transmission blocks TB1 to TB 26, each one of which including a respective basic chunk Ci. That is, for instance TB1 includes chunk C01, whereas TB26 includes chunk C26. In the example provided, TB14 includes, in addition to basic chunk C14, four other chunks relating to two derived contents, derived content A and derived content B. Regarding derived content A, chunk 1 and chunk 2 of content element 1 are transmitted, whereas regarding derived content B, chunk 1 of content element 1 and chunk 1 of content element 2 are transmitted.

A transmission block is a block for transmitting a basic chunk and content elements of the derived contents. The time duration of the transmission block is defined by the basic chunk. If the available bandwidth is larger than the bandwidth required for transmitting the basic chunk, the transmission block may also be used to transmit elements of a derived content. Moreover, depending on the available bandwidth, it is possible to broadcast more content elements of a derived content or content elements relating to different derived contents.

If only a fraction of the bandwidth required to send a basic chunk is available, individual chunks may be sent, distributing them over multiple transmission blocks. For instance, a single chunk may be transmitted using two transmission blocks.

### Example 1: Rewind point

The following non-limiting example is provided, as an illustration of an embodiment of the invention.

After the first 5 minutes of broadcasting, a so-called "rewind point derived content" (copy derived content) is created and transmitted, allowing the receiver side to receive a complete copy of the first 5 minutes and to display the content upon selection.

It is assumed that the 5 minutes are made up of 60 chunks, each one of which with a same time duration. The chunks are numbered according to the timing of their generation from 1 to 60.

In this case the composition rule is the following.

| | |
|---|---|
| Trigger condition: | Wait until the first 5 minutes of the original video stream are recorded. |
| Composition: | Create the scene element by referencing the sequence of chunks found via the trigger condition. In other words, create a copy of the first 5 minutes. |
| Broadcasting condition: | i) Broadcasting start: start the broadcasting 5 minutes after start of the broadcasting of the original video stream, ii) Broadcast end: broadcast the derived content with the highest priority (this has the effect that the bouquet stream composer 160 uses the available bandwidth to transmit the rewind point as fast as possible). |

Variation of this example are possible by varying the above indicated parameters, as for instance the composition, the broadcast start or the trigger condition.

### Example 2: Composition of complex scene elements

By using further rules and by starting from the basic derived content, more complex derived contents may be derived. A basic derived content is a derived content derived by applying a single rule as for instance the rewind point of example 1.

For instance, the rewind rule may be applied a second time after a predetermined time interval. A rewind point may for instance be generated 5 further minutes from generation of the first rewind point.

The procedure may be iterated to derive multiple rewind points, each rewind point including a copy of the 5 minutes of the original video event antecedent to the generation of the rewind point. In this manner the rewind derived content is available throughout the whole broadcast of the live TV event.

### Example 3: Broadcast of a plurality of rewind points

The generator may configure the generation of rewind points after 1, 2, and 3 minutes.

A further condition (annotation) configured is that the end of the broadcast of a given rewind point may have to take place before the beginning of the broadcast of the subsequent rewind point.

As clear from the above, by knowing the available bandwidth and the derived contents to be broadcast, it is possible to plan the broadcast of the original video stream and of the derived contents.

If, for instance, for the broadcast of a transmission block, five times the bandwidth of a basic chunk (i.e. the chunk of the original video stream) is available, and the only derived content are the three rewind points, it is possible to completely plan the broadcasting of the original video stream and of its derived contents: as a matter of fact, in this case it is possible to send all the content elements necessary for the three derived contents.

A transmission block makes reference, during broadcast of the rewind point, to at least one basic chunk and the corresponding chunks of the three rewind points.

Fig. 11 schematically illustrates the chunks of the original video stream recorded in the first 260 seconds, the content of the scheduled and simulated rewind points, and the scheduled block transmission of the bouquet. As exemplarily showed, the length of a chunk Ci, i.e. each chunk from chunk C01 to chunk C26, is 10 seconds.

After the basic chunks C01 to C06, corresponding to the first 60 seconds, have been broadcast, they are broadcast again during the next 60 seconds in which basic chunk C07 to C12, corresponding to the second 60 seconds are broadcast. That is, a first rewind point is sent after 1 minute.

Moreover, after the basic chunks C07 to C12, corresponding to the second 60 seconds, have been broadcast, chunks C01 to C12 are broadcast again during the next 60 seconds in which basic chunk C13 to C18, corresponding to the third 60 seconds are broadcast. That is, a second rewind point is sent after 2 minutes.

Finally, after the basic chunks C13 to C18, corresponding to the third 60 seconds, have been broadcast, chunks C01 to C18 are broadcast again during the next 60 seconds in which basic chunk C19 to C24, corresponding to the fourth 60 seconds are broadcast. That is, a third rewind point is sent after 3 minutes.

For the implementation of the above-discussed broadcasting schedule, a fourfold bandwidth is used and therefore required.

It is thus possible to compute the content of each block to be transmitted on the basis of the original video stream and on the derived contents to be transmitted.

For the transmission of a transmission block, all the referenced chunks are transmitted during a time period corresponding to the length of a basic chunk. The bandwidth requirement for the scheduled transmission of the chunks in the transmission blocks may be computed prior to the broadcasting on the basis of the composition of the derived contents and simulations.

A given configuration of the derived content generation may lead for example to exceed a pre-configured maximum bandwidth of the corresponding transmission blocks. However, by adjusting the configuration of the derived contents via the configurator 410 and/ or the bouquet stream composer 710 it is possible to selectively modify the bandwidth requirement. To this end, the maximal bandwidth required for the transmission of a transmission block can be established in advance and is available at the time of transmission.

In the following further specific embodiments of the invention are described.
E. 1 According to an embodiment of the invention there is provided a transmitter for live broadcasting a video stream representing an event as it happens, the transmitter comprising: a memory for storing parts of the original video stream; a processor for automatically deriving content, based on the stored parts of the original video stream, wherein deriving comprises including, in the derived content, at least one of the stored parts of the original video stream; a broadcast-transmitter for live broadcasting the original video stream through a transmission channel; and for broadcasting, through the transmission channel, the derived content, wherein broadcasting the derived content takes place at least one of: during the live broadcasting of the original video stream, and after the live broadcasting of the original video stream.
E. 2 According to an embodiment of the invention there is provided a transmitter for live broadcasting a video stream representing an event as it happens, the transmitter comprising: means for storing parts of the original video stream; processing means for automatically deriving content, based on the stored parts of the original video stream, wherein deriving comprises including, in the derived content, at least one of the stored parts of the original video stream; broadcasting means for live broadcasting the original video stream through a transmission channel; and for broadcasting, through the transmission channel, the derived content, wherein broadcasting the derived content takes place at least one of: during the live broadcasting of the original video stream, and after the live broadcasting of the original video stream.
E. 3 According to an embodiment of the invention there is provided a system comprising the transmitter of embodiment E. 1 and a receiver, wherein the transmitter further comprises: a further processor for determining a broadcast resource required for broadcasting the derived content; and an indication-transmitter for transmitting an indication of the determined broadcast resource; wherein the receiver comprises: an indication receiver for receiving the indication of the determined broadcast resource; and a processor for determining whether to block processing, at a receiver, of the derived content based on the received indication.
E. 4 According to an embodiment of the invention there is provided a system comprising the transmitter of embodiment E. 2 and a receiver, wherein the transmitter further comprises: further processing means for determining a broadcast resource required for broadcasting the derived content; and transmitting means for transmitting an indication of the determined broadcast resource; wherein the receiver comprises: receiving means for receiving the indication of the determined broadcast resource; and processing means for determining whether to block processing, at a receiver, of the derived content based on the received indication.
E. 5 According to an embodiment of the invention there is provided a computer program comprising computer-readable instructions configured, when executed on a computer, to cause the computer to carry out the method of any one of embodiments described above.
E. 6 A computer-readable medium having stored thereon the computer program of embodiment E. 5.

According to embodiments it may be possible to derive metadata of a given derived content, for instance the summary derived content, before the derived content is actually available. In this case the metadata may be information regarding the type of the derived content and/or the information that the derived content will become available in the future. This metadata may be broadcast to the user. Optionally, if based on this metadata this derived content is selected by or via the receiving side, push video sequence may be displayed on the receiving side in order to bridge the time until the derived content actually becomes available. The push video sequence may be for instance advertisement (i.e. additional content) and/or trailer sequences (i.e. another type of derived content).

Simple receiving side equipment may comprise a single high frequency receiver. In some embodiments, the original video stream and the derived content may be broadcast in a common video stream for example compatible with known standards like DVB. In this manner, the video stream is also receivable by such simple receiving side equipment.

In some embodiments, additional technical effects may be achieved. In particular, in some embodiments, it is possible to maintain the time order of the original video frames during the transmission and display of the derived content thus allowing a correct reproduction of the content on a user terminal. Moreover, in some embodiments, it is possible to interactively select specific additional contents (for instance the reproduction of a selected scene) during the broadcasting of the live event, without having buffered automatically the transmission channel.

Moreover, in some embodiments, the bandwidth of the transmission channel available for broadcasting the original video stream and any derived content (derived based on the stored parts of the original video stream) is variable, the transmitting side is configured to attempt to automatically derive and broadcast a plurality of derived contents whenever possible, and the number of derived contents that are derived at and broadcast from the transmitting side depends on the available bandwidth. The larger the available bandwidth, the higher the number of broadcast derived contents.

Moreover, in some embodiments, the timing of the broadcasting of the derived content may occur based on a criterion. The criterion may be a threshold indicative of a broadcast resource. Preferably the criterion may be defined, for instance, in terms of the overall maximum bandwidth available for broadcast. For instance, in an embodiment, if the criterion is not met, the broadcast of the derived content may occur after broadcasting of the original video stream. In another embodiment, if the criterion is met, the broadcast of the derived content may occur during broadcasting of the original video stream and/or after broadcasting of the original video stream.

Where the terms receiving side, processor, transmitting side, recording means, processing means etc. are used herewith, no restriction is made regarding how distributed these elements may be and regarding how gathered elements may be. That is, the constituent elements thereof may be distributed in different software or hardware components or devices for bringing about the intended function. A plurality of distinct elements may also be gathered for providing the intended functionalities. Any one of the above-referred elements of a transmitting side or receiving side may be implemented in hardware, software, field-programmable gate array (FPGA), application-specific integrated circuit (ASICs), and/or firmware, or the like. In further embodiments of the invention, any one of the above-mentioned receiving side, processor, transmitting side, etc. is replaced by receiving means, processing means, transmitting means, etc. respectively, or, by a receiving unit, processing unit, transmitting unit, etc. respectively for performing the functions of the above-mentioned receiving side, processor, transmitting side, etc.

In further embodiments of the invention, any one of the above-described steps or processes may be implemented using computer-executable instructions, for example in the form of computer-executable procedures, methods or the like, in any kind of computer languages, and/or in the form of embedded software on firmware, integrated circuits or the like.

Although the present invention has been described on the basis of detailed examples, the detailed examples only serve to provide the skilled person with a better understanding, and are not intended to limit the scope of the invention. The scope of the invention is much rather defined by the appended claims.

## Claims

1. Method for live broadcasting a video stream representing an event as it happens, the video stream being hereinafter referred to as "original video stream", the method comprising, at a transmitting side:
storing parts (s1) of the original video stream;
automatically deriving content (s2), hereinafter referred to as "derived content", based on the stored parts of the original video stream, wherein deriving comprises including, in the derived content, at least one of the stored parts of the original video stream;
live broadcasting (s3) the original video stream through a transmission channel; and
broadcasting (s4), through the transmission channel, the derived content, wherein broadcasting the derived content takes place at least one of:
during the live broadcasting of the original video stream, and
after the live broadcasting of the original video stream.

2. Method of claim 1, wherein the original video stream and the derived content are broadcast through the transmission channel on a same carrier frequency or on a same group of carrier frequencies.

3. Method of claim 1 or 2, wherein broadcasting, through the transmission channel, the derived content comprises broadcasting, through the transmission channel, a further video stream comprising the derived content.

4. Method of claim 3, further comprising:
broadcasting (s7), through the transmission channel, additional content that is not derived based on the stored parts of the original video stream, wherein the additional content is broadcast as part of the further video stream and the additional content is arranged to be viewed at least one of:
prior to the derived content,
after the derived content, and
during the derived content.

5. Method of claim 3 or 4, wherein the further video stream comprising the derived content comprises a partial or complete copy of the original video stream, and the further video stream is broadcast with a time delay with respect to the broadcasting of the original video stream.

6. Method according to any one of the preceding claims, wherein the derived content is hereinafter referred to as "first derived content" (s8), and the method further comprises:
automatically (s9) deriving further content, hereinafter referred to as "second derived content", based on the stored parts of the original video stream, wherein deriving the second derived content comprises including, in the second derived content, at least one of the stored parts of the original video stream; and
broadcasting, through the transmission channel, the second derived content.

7. Method according to both claims 5 and 6, wherein
the further video stream comprising the first derived content is hereinafter referred to as "first further video stream", and the time delay is hereinafter referred to as "first time delay",
broadcasting, through the transmission channel, the second derived content comprises broadcasting, through the transmission channel, a further video stream, hereinafter referred to as "second further video stream", comprising the second derived content;
the second further video stream comprising the second derived content comprises a copy of the original video stream;
the second further video stream is broadcast with a time delay, hereinafter referred to as "second time delay", with respect to the broadcasting of the original video stream; and
the second time delay is different from the first time delay.

8. Method according to any one of claims 1 to 5, wherein the derived content is hereinafter referred to as "first derived content" (s8), and the method further comprises:
automatically deriving (s9) further content, hereinafter referred to as "second derived content", based on the stored parts of the original video stream, wherein deriving the second derived content comprises including, in the second derived content, at least one of the stored parts of the original video stream, and wherein automatically deriving the first derived content and automatically deriving the second derived content are carried out using different derivation rules;
determining (s10) whether a criterion for broadcasting the second derived content is met; and
if it is determined (s12) that the criterion is not met, refraining from broadcasting the second derived content.

9. Method of claim 8, further comprising, at the transmitting side:
determining (s13) a first broadcast resource required for broadcasting the first derived content and a second broadcast resource required for broadcasting the second derived content,
wherein determining whether the criterion for broadcasting the second derived content is met comprises:
determining whether a sum of the first broadcast resource and the second broadcast resource exceeds a threshold; and
if so, determining that the criterion is met.

10. Method according to any one of claims 1 to 5, further comprising, at a transmitting side:
determining a broadcast resource (s13) required for broadcasting the derived content; and
transmitting an indication (s14) of the determined broadcast resource;
the method further comprising, at a receiving side:
receiving the indication (s15) of the determined broadcast resource; and
determining (s16) whether to block processing, at a receiving side, of the derived content based on the received indication.

11. Method of claim 6, further comprising, at a transmitting side:
broadcasting metadata (s18) about the first and second derived contents;
the method further comprising at a receiving side:
receiving the metadata; and
one of:
automatically (s19) determining whether to block processing, at a receiving side, of the first derived content and/or of the second derived content based on the received metadata; and
presenting (s20) the received metadata or information derived therefrom on a user interface to let a user determine whether the processing, at a receiving side, of the first derived content and/or of the second derived content is to be blocked.

12. Method according to any one of claims 1 to 5, wherein the derived content is hereinafter referred to as "first derived content", and the method further comprises:
automatically deriving further content, hereinafter referred to as "second derived content", based on the stored parts of the original video stream, wherein deriving the second derived content comprises including, in the second derived content, at least one of the stored parts of the original video stream,
automatically determining whether the second derived content has priority over the first derived content in accordance with a priority rule;
wherein broadcasting, through the transmission channel, the derived content comprises broadcasting at least the second derived content if it is determined that the second derived content has priority over the first derived content and comprises broadcasting at least the first derived content if it is determined that the second derived content has not priority over the first derived content.

13. A transmitter (11) for live broadcasting a video stream representing an event as it happens, the video stream being hereinafter referred to as "original video stream", the transmitter comprising:
a memory (120) for storing parts of the original video stream;
a processor (130) for automatically deriving content, hereinafter referred to as "derived content", based on the stored parts of the original video stream, wherein deriving comprises including, in the derived content, at least one of the stored parts of the original video stream;
a broadcast-transmitter (170) for live broadcasting the original video stream through a transmission channel; and for broadcasting, through the transmission channel, the derived content, wherein broadcasting the derived content takes place at least one of:
during the live broadcasting of the original video stream, and
after the live broadcasting of the original video stream.

14. A transmitter (11) for live broadcasting a video stream representing an event as it happens, the video stream being hereinafter referred to as "original video stream", the transmitter comprising:
means (120) for storing parts of the original video stream;
processing means (130) for automatically deriving content, hereinafter referred to as "derived content", based on the stored parts of the original video stream, wherein deriving comprises including, in the derived content, at least one of the stored parts of the original video stream;
broadcasting means (170) for live broadcasting the original video stream through a transmission channel; and for broadcasting, through the transmission channel, the derived content, wherein broadcasting the derived content takes place at least one of:
during the live broadcasting of the original video stream, and
after the live broadcasting of the original video stream.

15. A system comprising the transmitter of claim 13 and a receiver, wherein the transmitter further comprises:
a further processor for determining a broadcast resource required for broadcasting the derived content; and
an indication-transmitter for transmitting an indication of the determined broadcast resource;
wherein the receiver comprises:
an indication receiver for receiving the indication of the determined broadcast resource; and
a processor for determining whether to block processing, at a receiver, of the derived content based on the received indication.

16. A system comprising the transmitter of claim 14 and a receiver, wherein the transmitter further comprises:
further processing means for determining a broadcast resource required for broadcasting the derived content; and
transmitting means for transmitting an indication of the determined broadcast resource;
wherein the receiver comprises:
receiving means for receiving the indication of the determined broadcast resource; and
processing means for determining whether to block processing, at a receiver, of the derived content based on the received indication.

17. A computer program comprising computer-readable instructions configured, when executed on a computer, to cause the computer to carry out the method of any one of claims 1 to 9 and 12.

18. A computer-readable medium having stored thereon the computer program of claim 17.
